# EUROPÄISCHE PATENTSCHRIFT

(11) **EP 1 914 401 B1**
(45) Veröffentlichungstag und Bekanntmachung des Hinweises auf die Patenterteilung: **18.01.2012**
(21) Anmeldenummer: 07020249.4
(22) Anmeldetag: 16.10.2007
(51) Int. Cl.: F01N 13/10, F01N 13/18

(54) **Abgaskrümmer**
Exhaust manifold
Collecteur de gaz d'échappement

(30) Priorität: 17.10.2006 DE 202006015883 U
(43) Veröffentlichungstag der Anmeldung: 23.04.2008
(73) Patentinhaber: Friedrich Boysen GmbH & Co. KG, 72213 Altensteig (DE)
(72) Erfinder: Diez, Rainer, 72202 Nagold (DE); Sahan, Ramazan, 72285 Pfalzgrafenweiler (DE); Ramusch, Marcus, 72213 Altensteig (DE)
(74) Vertreter: Manitz, Finsterwald & Partner GbR

(56) Entgegenhaltungen:
- EP-A- 1 426 557
- EP-A- 1 536 141
- DE-A1- 3 925 802
- DE-A1- 4 305 886

## Beschreibung

Die Erfindung betrifft einen Abgaskrümmer für eine Brennkraftmaschine gemäß dem Oberbegriff von Anspruch 1.

Der Abgaskrümmer ist ein Bestandteil der Abgasanlage von Brennkraftmaschinen. Er dient zur Abführung der in der Brennkraftmaschine entstehenden heißen Verbrennungsgase in den weiteren Abgasstrang und wird unmittelbar an die entsprechenden Auslässe der Brennkraftmaschine angeflanscht.

Abgaskrümmer werden oftmals als Gussteil hergestellt, insbesondere aus Gusseisen, welches sich neben Temperaturbeständigkeit und Korrosionsfestigkeit aufgrund seiner Dickwandigkeit durch seine mechanische Tragfähigkeit auszeichnet. Diese Tragfähigkeit ist insbesondere dann erforderlich, wenn der Abgaskrümmer zusätzlich eine Tragfunktion zur Lagerung nachgeordneter Bauteile der Abgasanlage wie Abgaskatalysator oder Turbolader übernehmen soll.

Nachteilig an derartigen Gusskrümmern ist die durch die heißen Verbrennungsgase verursachte thermische Ausdehnung, die über die Ausdehnung des Abgaskrümmers mehrere Millimeter betragen kann. Diese thermische Ausdehnung verursacht aufgrund der Verschraubung mit der Brennkraftmaschine unerwünschte Spannungen, die die Flanschbefestigung stark belasten und aufgrund der Starrheit des Gussteils nicht ausgeglichen werden können.

Neben derartigen Gusskrümmern werden daher auch gebaute Krümmer als Rohr- oder Schalenkrümmer eingesetzt, die aus Blechmaterial in einoder mehrschaliger Bauweise hergestellt werden und gegenüber Gusskritmmern günstigere thermische Ausdehnungseigenschaften besitzen, da thermisch bedingte Längenänderungen durch Verbiegen des Rohroder Schalenkörpers ausgeglichen werden können. Sie weisen im Vergleich mit Gusskrümmern jedoch eine geringere mechanische Festigkeit und damit Tragfähigkeit auf.

Ein Abgaskrümmer gemäß dem Oberbegriff von Anspruch 1 ist aus DE 43 05 886 A1 bekannt. EP 1 536 141 A1 lehrt, ein Turbinengehäuse integral mit einem Abgassammler und einem Zylinderkopf zu gießen, um Gewicht zu sparen und den Montageaufwand zu verringern. DE 39 25 802 A1 betrifft einen Abgaskrümmer mit einem Eintrittsflansch und einem Austrittsflansch, welche beide als Gussteile ausgebildet und über zwei Gussstege einstückig miteinander verbunden sind. Die Flansche verfügen jeweils über Rohraufnahmen, in welche aus Stahlblech gebildete Rohrabschnitte eingegossen sind.

Aufgabe der vorliegenden Erfindung ist es, einen Abgaskrümmer der eingangs genannten Art zu schaffen, der eine gute mechanische Tragfähigkeit aufweist und bei dem gleichzeitig durch thermische Ausdehnung verursachte Spannungen verringert sind sowie die Führung der Abgase verbessert ist.

Die Aufgabe wird durch einen Abgaskrümmer mit den Merkmalen des Anspruchs 1 gelöst.

Der erfindungsgemäße Abgaskrümmer ist somit eine Kombination aus Gusskrümmer und gebautem Rohr- oder Schalenkrümmer. Der Gussteil übernimmt hierbei die Tragfunktion, während durch die als gebautes Rohr- oder Schalenteil ausgeführten weiteren Abgasführungen übermäßige Spannungen ausgeglichen werden, die durch die von den durchströmenden heißen Abgasen verursachte thermische Ausdehnung bedingt sind. Somit ist es möglich, auch größere Abgaskrümmer zur Führung der Abgasströme von Brennkraftmaschinen mit größerer Zylinderanzahl, wie beispielsweise Reihensechszylindermotoren hinsichtlich Tragfähigkeit und thermischem Ausdehnungsverhalten zu verbessern.

Bei einer bevorzugten Ausführungsform der Erfindung ist der Gussteil in Richtung der Verbindungslinie der Auslässe der Brennkraftmaschine betrachtet in der Mitte und der gebaute Rohr- oder Schalenteil außerhalb davon angeordnet. Hierdurch ist eine symmetrische Bauweise des Abgaskrümmers möglich. Das in der Mitte angeordnete Gussteil übernimmt hierbei vorteilhaft die Tragfunktion für nachgeordnete Elemente des Abgassystems, während jeweils ein gebautes Rohr- oder Schalenteil die Abgasführung für die jeweils von der Mitte entfernteren Auslässe der Brennkraftmaschine bildet.

Bei einer vorteilhaften Ausführungsform der Erfindung ist der Gussteil einstückig mit der Sammeleinrichtung ausgebildet. Die als Gussteil ausgebildeten Abgasführungen und die Sammeleinrichtung werden also als ein Bauteil ausgeführt. Hierdurch wird eine Platz sparende und kompakte Bauweise des Abgaskrümmers ermöglicht, so dass der Abgaskrümmer beschränkten Platzverhältnissen im Einbauraum der Brennkraftmaschine Rechnung tragen kann.

Bevorzugt ist die Abgasauslassöffnung der Sammeleinrichtung in einer Ebene angeordnet, die zur Ebene der Abgaseinlassöffnungen einen Winkel von zumindest annähernd 90° aufweist. Hierdurch wird der beispielsweise in horizontaler Richtung aus der Brennkraftmaschine austretende Abgasstrom nach unten umgelenkt. Die Verwendung eines Gussteils erlaubt hierbei eine besonders kompakte Bauweise, da in einem Gussteil die Umlenkung des Abgases mit geringeren Radien erfolgen kann als bei entsprechenden Rohr- oder Schalenteilen.

Bei einer weiteren bevorzugten Ausführungsform sind die gebauten Rohroder Schalenteile luftspaltisoliert ausgebildet, mit Innenrohren oder - schalen und Außenrohren oder -schalen. Durch diese doppelwandige Ausbildung der gebauten Rohr- oder Schalenteile erfolgt zum einen eine thermische Isolation gegenüber dem Motorraum, zum anderen wird dadurch die vorzeitige Abkühlung des Abgases vermieden, so dass dieses mit relativ hoher Temperatur in eine nachgeschaltete Abgasreinigungsanlage eintreten kann. Hierdurch wird die Wirksamkeit der Abgasreinigungsanlage erhöht und ihre Ansprechzeit verkürzt.

Vorteilhafterweise sind die Innenrohre oder -schalen jeweils mit Schiebesitz im Gussteil geführt. Dadurch wird ein Ausgleich von unterschiedlichen thermischen Ausdehnungen zwischen Innenrohren oder -schalen und Außenrohren oder -schalen ermöglicht.

Bevorzugt sind die Außenrohre oder Schalen mit dem Gussteil fest verbunden, insbesondere verschweißt. Die feste Verbindung gewährleistet einerseits die mechanische Stabilität des Abgaskrümmers und andererseits die Gasdichtigkeit gegenüber den Abgasen.

Bei einem vorteilhaften Ausführungsbeispiel der Erfindung ist zwischen den gebauten Rohr- oder Schalenteilen und dem Gussteil jeweils ein Entkopplungselement angeordnet. Dieses Entkopplungselement gewährleistet einen zusätzlichen Ausgleich der thermischen Ausdehnung zwischen den Teilen des Abgaskrümmers.

Erfindungsgemäß ist in der Mitte des Gussteils eine Trennwand vorgesehen. Durch die damit bewirkte Trennung wird eine unerwünschte Wechselwirkung der Abgasströme in den beiden Krümmerhälften miteinander vermieden.

Bei einer weiteren vorteilhaften Ausführungsform der Erfindung weist der Gussteil einen Auslassflansch zur Verbindung mit einem nachfolgenden Teil einer Abgasanlage, insbesondere Turbolader auf. Somit ist es möglich einen Turbolader sehr nah an der Brennkraftmaschine anzuordnen, so dass wiederum eine nachgeschaltete Abgasreinigungsanlage zur Verbesserung der Reinigungswirkung näher an die Brennkraftmaschine herangerückt werden kann. Ferner erhöht sich dadurch auch der Wirkungsgrad des Turboladers.

Gemäß einer alternativen Ausführungsform der Erfindung weist der Gussteil ein angeformtes Ladergehäuse auf. Im Unterschied zur vorstehend genannten Ausführungsform entfällt somit der Verbindungsflansch, d.h. der Gussteil und das Ladergehäuse sind einstückig ausgeführt, wodurch sich Herstellungs- und Montagekosten reduzieren lassen.

Bei einer weiteren bevorzugten Ausführungsform der Erfindung ist jeder der Teile mit zwei Abgaseinlassöffnungen verbunden. Dies hat sich als vorteilhaft herausgestellt.

Weitere bevorzugte Ausführungsformen der Erfindung ergeben sich aus der Zeichnung und der nachfolgenden Beschreibung eines Ausführungsbeispiels. In der Zeichnung zeigt:
- Fig. 1: eine Seitenansicht eines erfindungsgemäßen Abgaskrümmers; und
- Fig. 2: den Abgaskrümmer gemäß Fig. 1 mit einem angeflanschten Turbolader in gedrehter Ansicht.

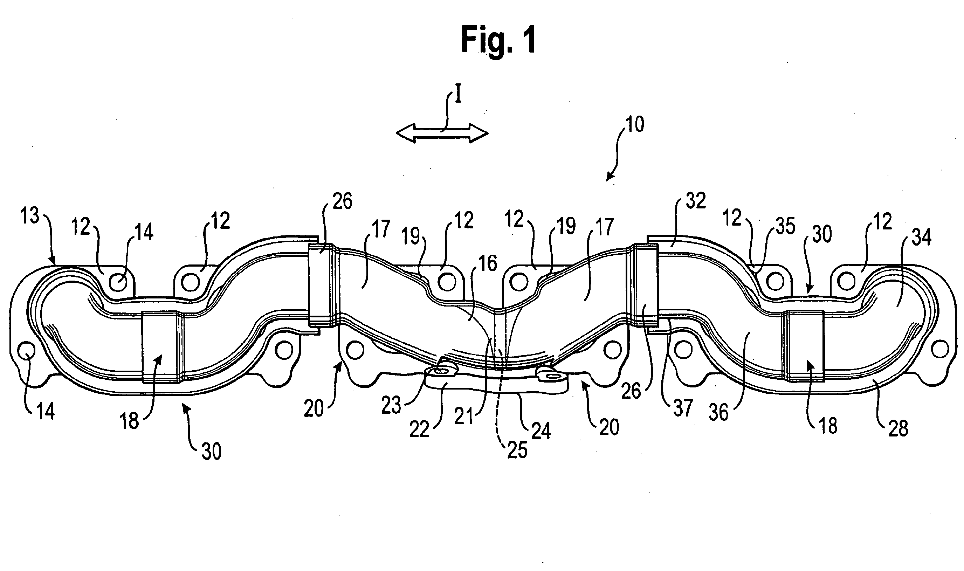

Fig. 1 zeigt einen Abgaskrümmer 10, der insgesamt sechs Einlassflansche 12 aufweist, die in einer der Zeichnungsebene entsprechenden Ebene entlang einer Längsachse I des Abgaskrümmers 10 angeordnet sind. Jeder Einlassflansch 12 weist zwei diagonal angeordnete Bohrungen 14 auf, durch die in der Figur nicht dargestellte Schrauben zur Befestigung des Abgaskrümmers 10 an eine ebenfalls nicht dargestellte Zylinderbank einer Brennkraftmaschine durchführbar sind.

Die Einlassflansche 12 weisen jeweils eine Abgaseinlassöffnung 13 auf, die jeweils mit einem entsprechenden Auslass der Brennkraftmaschine korrespondiert. Der Abgaskrümmer 10 setzt sich aus drei Teilen zusammen, wobei der mittlere Teil ein einwandiges Gussteil 16 und die beiden äußeren Teile zwei zueinander spiegelsymmetrische, so genannte LSI-Teile 18, das heißt luftspaltisolierte Teile, sind.

Der Gussteil 16 umfasst zwei T-förmige Guss-Abgasführungen 20, deren durchgehende Abschnitte 17 jeweils im Wesentlichen in Längsrichtung I des Abgaskrümmers 10 verlaufen, jedoch zur besseren Zugänglichkeit der Bohrungen 14 der Einlassflansche 12 S-förmig gebogen sind. Die kurzen abzweigenden Abschnitte 19 der Guss-Abgasführungen 20 sind jeweils mit einem Einlassflansch 12 verbunden.

Die zur Mitte des Abgaskrümmers 10 gewandten Enden der durchgehenden Abschnitte 17 der Guss-Abgasführungen 20 münden in eine Sammeleinrichtung 21, die zwischen den beiden Guss-Abgasführungen 20 einstückig mit diesen ausgebildet ist. Die Sammeleinrichtung 21 weist einen senkrecht zur Ebene der Einlassflansche 12 angeordneten Auslassflansch 22 mit einer nach unten weisenden Abgasauslassöffnung 24 auf. Der Auslassflansch 22 ist mit drei Flanschbohrungen 23 versehen, über die der Abgaskrümmer 10 mit nachfolgenden Bauelementen der Abgasanlage verbunden werden kann.

Die Sammeleinrichtung 21 ist durch eine Trennwand 25 unterteilt, deren Position durch Strichelung dargestellt ist und die eine Trennung der von den beiden Guss-Abgasführungen 20 in die Sammeleinrichtung 21 einströmenden Abgasströme bewirkt.

Die äußeren Enden 26 der durchgehenden Abschnitte 17 der Guss-Abgasführungen 20 dienen zur Aufnahme der beiden spiegelsymmetrischen LSI-Teile 18.

Jeder LSI-Teil 18 besteht aus einem gebauten äußeren Schalenelement 28 und einer in dessen Inneren angeordneten gebauten Rohr-Abgasführung 30. Rohr-Abgasführung 30 und Schalenelement 28 sind lediglich im Bereich der im Einlassflansch 12 ausgebildeten Abgaseinlassöffnungen 13 miteinander verbunden, und zwar gasdicht. Das Abgas strömt durch das Innere der Rohr-Abgasführung 30. Zwischen Schalenelement 28 und Rohr-Abgasführung 30 verbleibt ein Luftspalt 32, der nicht von Abgas durchströmt wird und somit der Wärmeisolierung des LSI-Teils 18 dient.

Das Schalenelement 28 umfasst zwei Schalenhälften, wobei die Trennebene parallel zur Zeichenebene verläuft. Zur besseren Darstellung ist in Fig. 1 die den Einlassflanschen 12 gegenüberliegende obere Schalenhälfte weggelassen. Die untere Schalenhälfte ist, wie oben bereits erwähnt, im Bereich der Abgaseinlassöffnungen 13 mit den Einlassflanschen 12 und der Rohr-Abgasführung 30 gasdicht verbunden.

Die Rohr-Abgasführung 30 ist derart zweistückig gestaltet, dass ein erster Abschnitt als einfaches Rohrstück 34 ausgebildet ist und in einen zweiten, als T-Rohrstück 36 ausgebildeten Abschnitt mündet. Einfaches Rohrstück 34 und T-Rohrstück 36 sind durch Schiebesitz miteinander verbunden, um durch thermische Ausdehnung bedingte Längenänderungen ausgleichen zu können.

Am anderen Ende des einfachen Rohrstücks 34 ist ein äußerer Einlassflansch 12 angeordnet. Der Abzweig 35 des T-Rohrstücks 36 ist mit dem nächst inneren Einlassflansch 12 verbunden.

Das dritte Ende 37 des T-Rohrstücks 36 ist zur Ausbildung eines längenausgleichenden Schiebesitzes in das äußere Ende 26 der Guss-Abgasführung 20 eingeschoben. Zugleich ist das Schalenelement 28 außen über das äußere Ende 26 geschoben und dort mit der Guss-Abgasführung 20 verschweißt, um einerseits eine starre mechanische Verbindung mit dem Gussteil 16 herzustellen und andererseits den Luftspalt 32 nach außen abzuschließen.

Die beiden LSI-Teile 18 sind ebenso wie der Gussteil 16 S-förmig gebogen, um neben einer verbesserten Zugänglichkeit der Bohrungen 14 durch thermische Ausdehnung verursachte Längenänderungen besser ausgleichen zu können.

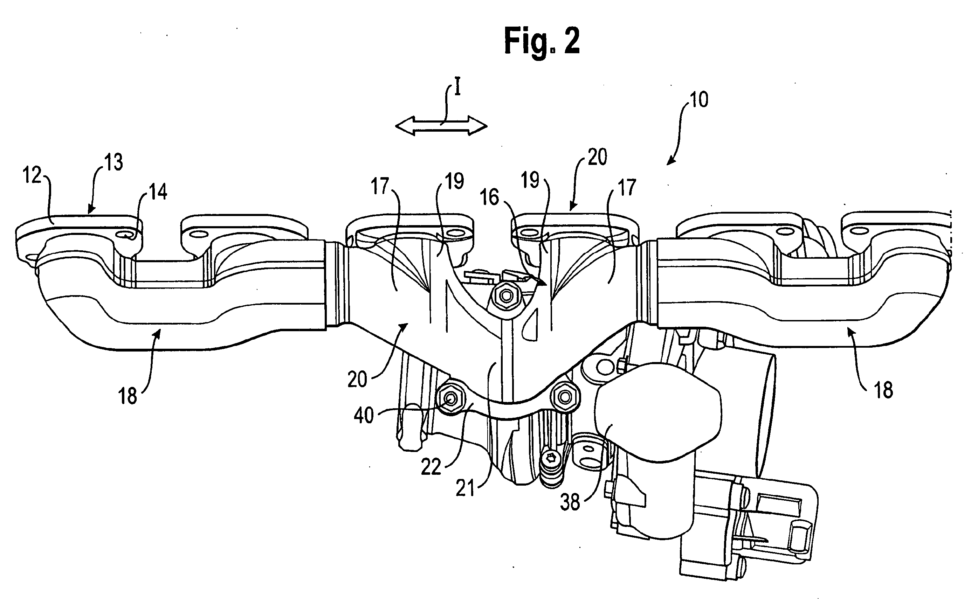

Fig. 2 zeigt den Abgaskrümmer 10 von Fig. 1 aus einer anderen Blickrichtung. Während sich in Fig. 1 die Ebene der Einlassflansche 12 annähernd in der Zeichenebene befindet, steht sie in Fig. 2 fast senkrecht zur Zeichenebene. Zusätzlich sind auch die oberen Schalenhälften der Schalenelemente 28 der LSI-Teile 18 dargestellt. Diese sind mit dem Gussteil 16 ebenfalls verschweißt, während die Verbindung mit den unteren Schalenhälften auch durch Falzen erfolgen kann.

Am Auslassflansch 22 des Gussteils 16 ist ein Turbolader 38 mittels in den Flanschbohrungen 23 vorgesehenen Schraubverbindungen 40 angeflanscht.

Es ist gut zu erkennen, dass der Turbolader 38 sehr nahe an der durch die Guss-Abgasführungen 20, die T-Rohrstücke 36 und die einfachen Rohrstücke 34 gebildeten Rohrachse I angeordnet ist, was zu einer sehr kompakten Bauweise der Abgasanlage beiträgt.

Es ist anzumerken, dass sich ein erfindungsgemäßer Abgaskrümmer nicht nur in dieser beispielhaften, für eine sechszylindrige Zylinderbank ausgelegten Variante, sondern auch für längere und auch kürzere Zylinderbänke herstellen und einsetzen lässt.

### Bezugszeichenliste

- 10: Abgaskrümmer
- 12: Einlassflansch
- 13: Abgaseinlassöffnung
- 14: Bohrung
- 16: Gussteil
- 17: durchgehender Abschnitt
- 18: LSI-Teil
- 19: abzweigender Abschnitt
- 20: Guss-Abgasführung
- 21: Sammeleinrichtung
- 22: Auslassflansch
- 23: Flanschbohrung
- 24: Abgasauslassöffnung
- 25: Trennwand
- 26: Endbereich
- 28: Schalenteilelement
- 30: gebaute Rohr-Abgasführung
- 32: Luftspalt
- 34: einfaches Rohrstück
- 35: Abzweig
- 36: T-Rohrstück
- 37: Ende von 36
- 38: Turbolader
- 40: Schraubverbindung

- I: Längsrichtung

## Patentansprüche

1. Abgaskrümmer (10) für eine Brennkraftmaschine mit mehreren Abgasführungen (20, 30, 34, 36), deren eines eine Abgaseinlassöffnung (13) aufweisendes Ende (12) jeweils mit einem Auslass der Brennkraftmaschine verbindbar ist und deren anderes Ende jeweils mit einer eine Abgasauslassöffnung (24) aufweisenden Sammeleinrichtung (21) verbunden ist,
wobei mindestens eine Abgasführung vom Auslass der Brennkraftmaschine bis zur Sammeleinrichtung (21) als Gussteil (16) und mindestens eine andere Abgasführung vom Auslass der Brennkraftmaschine bis zur Sammeleinrichtung (21) als gebautes Rohr- oder Schalenteil (18) ausgebildet ist,
**dadurch gekennzeichnet, dass**
in der Mitte des Gussteils (16) eine Trennwand (25) vorgesehen ist.

2. Abgaskrümmer nach Anspruch 1,
**dadurch gekennzeichnet, dass**
der Gussteil (16) in Richtung der Verbindungslinie der Auslässe der Brennkraftmaschine gesehen in der Mitte des Abgaskrümmers (10) und der gebaute Rohr- oder Schalenteil (18) außerhalb davon angeordnet ist.

3. Abgaskrümmer nach Anspruch 1 oder 2,
**dadurch gekennzeichnet, dass**
der Gussteil (16) einstückig mit der Sammeleinrichtung (21) ausgebildet ist.

4. Abgaskrümmer nach Anspruch 3,
**dadurch gekennzeichnet, dass**
die Abgasauslassöffnung (24) in einer Ebene angeordnet ist, die zur Ebene der Abgaseinlassöffnungen (13) einen Winkel von zumindest annähernd 90° aufweist.

5. Abgaskrümmer nach einem der vorhergehenden Ansprüche,
**dadurch gekennzeichnet, dass**
die gebauten Rohr- oder Schalenteile (18) luftspaltisoliert ausgebildet sind, mit Innenrohren oder -schalen (30, 34, 36) und Außenrohren oder -schalen (28).

6. Abgaskrümmer nach Anspruch 5,
**dadurch gekennzeichnet, dass**
die Innenrohre oder -schalen (36) jeweils mit Schiebesitz im Gussteil (16) geführt sind.

7. Abgaskrümmer nach Anspruch 5 oder 6,
**dadurch gekennzeichnet, dass**
die Außenrohre oder -schalen (28) mit dem Gussteil (16) fest verbunden, insbesondere verschweißt sind.

8. Abgaskrümmer nach einem der vorhergehenden Ansprüche,
**dadurch gekennzeichnet, dass**
zwischen den gebauten Rohr- oder Schalenteilen (18) und dem Gussteil (16) jeweils ein Entkopplungselement angeordnet ist.

9. Abgaskrümmer nach einem der vorhergehenden Ansprüche,
**dadurch gekennzeichnet, dass**
der Gussteil (16) einen Auslassflansch (22) zur Verbindung mit einem nachfolgenden Teil einer Abgasanlage, insbesondere Turbolader (38), aufweist.

10. Abgaskrümmer nach einem der Ansprüche 1 bis 8,
**dadurch gekennzeichnet, dass**
der Gussteil (16) ein angeformtes Ladergehäuse aufweist.

11. Abgaskrümmer nach einem der vorhergehenden Ansprüche,
**dadurch gekennzeichnet, dass**
jeder der Teile (16, 18) mit zwei Abgaseinlassöffnungen (13) verbunden ist.

## Claims

1. An exhaust manifold (10) for an internal combustion engine comprising a plurality of exhaust gas lines (20, 30, 34, 36) whose one end (12) having an exhaust gas intake opening (13) can in each case be connected to an outlet of the internal combustion engine and whose other end is in each case connected to a collection device (21) having an exhaust gas outlet opening (24), wherein at least one exhaust gas line is formed as a cast part (16) from the outlet of the internal combustion engine up to the collection device (21) and at least one other exhaust gas line is formed as a built pipe part or shell part (18) from the outlet of the internal combustion engine up to the collection device (21),
**characterised in that**
a dividing wall (25) is provided at the middle of the cast part (16).

2. An exhaust manifold in accordance with claim 1,
**characterised in that**
the cast part (16) is arranged, viewed in the direction of the outlets of the internal combustion engine, in the middle of the exhaust manifold (10) and the built pipe part or shell part (18) is arranged outside thereof.

3. An exhaust manifold in accordance with claim 1 or claim 2,
**characterised in that**
the cast part (16) is formed in one piece with the collection device (21).

4. An exhaust manifold in accordance with claim 3,
**characterised in that**
the exhaust gas outlet opening (24) is arranged in a plane which has an angle of at least approximately 90° to the plane of the exhaust gas intake openings (13).

5. An exhaust manifold in accordance with any one of the preceding claims,
**characterised in that**
the built pipe parts or shell parts (18) are formed with air-gap insulation, with inner pipes or inner shells (30, 34, 36) and outer pipes or outer shells (28).

6. An exhaust manifold in accordance with claim 5,
**characterised in that**
the inner pipes or inner shells (36) are each guided in the cast part (16) with a sliding seat.

7. An exhaust manifold in accordance with claim 5 or claim 6,
**characterised in that**
the outer pipes or outer shells (28) are fixedly connected, in particular welded, to the cast part (16).

8. An exhaust manifold in accordance with any one of the preceding claims,
**characterised in that**
a respective decoupling element is arranged between the built pipe parts or shell parts (18) and the cast part (16).

9. An exhaust manifold in accordance with any one of the preceding claims,
**characterised in that**
the cast part (16) has an outlet flange (22) for connection to a subsequent part of an exhaust gas system, in particular to a turbocharger (38).

10. An exhaust manifold in accordance with any one of the claims 1 to 8,
**characterised in that**
the cast part (16) has a charger housing shaped on.

11. An exhaust manifold in accordance with any one of the preceding claims,
**characterised in that**
each of the parts (16, 18) is connected to two exhaust gas intake openings (13).

## Revendications

1. Collecteur de gaz d'échappement (10) pour un moteur à combustion interne avec plusieurs guidages de gaz d'échappement (20, 30, 34, 36), dont une extrémité (12) comportant une ouverture d'entrée de gaz d'échappement (13) est susceptible d'être connectée à une sortie du moteur à combustion interne, et dont l'autre extrémité est respectivement reliée à un système collecteur (21) comportant une ouverture de sortie de caisse d'échappement (24),
dans lequel au moins un guidage de gaz d'échappement allant de la sortie du moteur à combustion interne jusqu'au système collecteur (21) est réalisé sous forme de pièce de fonderie (16) et au moins un autre guidage de gaz d'échappement allant de la sortie du moteur à combustion interne jusqu'au système collecteur (21) est réalisé sous forme de pièce tubulaire ou de pièce en coque (18) montée,
**caractérisé en ce qu'**il est prévu une paroi de séparation (25) au milieu de la pièce de fonderie (16).

2. Collecteur de gaz d'échappement selon la revendication 1,
**caractérisé en ce que** la pièce de fonderie (16), vue en direction de la ligne de liaison des sorties du moteur à combustion interne, est agencée au milieu du collecteur de gaz d'échappement (10), et la pièce tubulaire ou en coque (18) montée est agencée à l'extérieur de celui-ci.

3. Collecteur de gaz d'échappement selon la revendication 1 ou 2,
**caractérisé en ce que** la pièce de fonderie (16) est réalisée d'un seul tenant avec le système collecteur (21).

4. Collecteur de gaz d'échappement selon la revendication 3,
**caractérisé en ce que** l'ouverture de sortie de gaz d'échappement (24) est agencée dans un plan qui présente par rapport au plan des ouvertures d'entrée de gaz d'échappement (13) un angle d'au moins approximativement 90°.

5. Collecteur de gaz d'échappement selon l'une des revendications précédentes,
**caractérisé en ce que** les pièces tubulaires ou en coque (18) montées sont réalisées de manière isolée avec un intervalle d'air, présentant des tubes ou des coques intérieur(e)s (30, 34, 36) et des tubes ou des coques extérieur(e)s (28).

6. Collecteur de gaz d'échappement selon la revendication 5,
**caractérisé en ce que** les tubes ou les coques intérieur(e)s (36) sont respectivement guidé(e)s avec ajustement à coulissement dans la pièce de fonderie (16).

7. Collecteur de gaz d'échappement selon la revendication 5 ou 6,
**caractérisé en ce que** les tubes ou les coques extérieur(e)s (28) sont fermement relié(e)s, en particulier soudé(e)s, avec la pièce de fonderie (16).

8. Collecteur de gaz d'échappement selon l'une des revendications précédentes,
**caractérisé en ce qu'**un élément de découplage est respectivement agencé entre les pièces tubulaires ou en coque (18) montées et la pièce de fonderie (16).

9. Collecteur de gaz d'échappement selon l'une des revendications précédentes,
**caractérisé en ce que** la pièce de fonderie (16) comporte une bride de sortie (22) pour la jonction avec une partie successive d'une installation de gaz d'échappement, en particulier d'un turbocompresseur (38).

10. Collecteur de gaz d'échappement selon l'une des revendications 1 à 8,
**caractérisé en ce que** la pièce de fonderie (16) comprend un boîtier de compresseur conformé.

11. Collecteur de gaz d'échappement selon l'une des revendications précédentes,
**caractérisé en ce que** chacune des pièces (16, 18) est reliée à deux ouvertures d'entrée de gaz d'échappement (13).
